(19) Europäisches Patentamt European Patent Office Office européen des brevets

(11) **EP 2 521 137 B1**

(12) **EUROPEAN PATENT SPECIFICATION**

(45) Date of publication and mention of the grant of the patent:
**17.12.2014 Bulletin 2014/51**

(51) Int Cl.:
**H01B 3/44** *(2006.01)*     **C08K 3/26** *(2006.01)*

(21) Application number: **11164783.0**

(22) Date of filing: **04.05.2011**

(54) **Polymer composition for electrical and communication devices**

Polymerzusammensetzung für elektrische und Kommunikationsgeräte

Composition de polymère pour dispositifs électriques et de communication

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.11.2012 Bulletin 2012/45**

(73) Proprietor: **Borealis AG**
**1220 Vienna (AT)**

(72) Inventors:
  • **Englund, Villgot**
    **SE-41664, Göteborg (SE)**
  • **Hagstrand, Per-Ola**
    **SE-44446, Stenungsund (SE)**
  • **Johansson, Audrey Frenot**
    **47170, Höviksnäs (SE)**
  • **Nilsson, Ulf**
    **SE-44441, Stenungsund (SE)**

  • **Linder, Åsa**
    **41743, Göteborg (SE)**
  • **Nylander, Perry**
    **41261, Göteborg (SE)**

(74) Representative: **Campbell, Neil Boyd et al**
    **Dehns**
    **St Bride's House**
    **10 Salisbury Square**
    **London**
    **EC4Y 8JD (GB)**

(56) References cited:
    **US-A- 5 889 117     US-A1- 2003 139 511**

  • **DATABASE WPI Week 200176 Thomson Scientific, London, GB; AN 2001-659204 XP002659656, & JP 2001 266650 A (HITACHI CABLE LTD) 28 September 2001 (2001-09-28)**

**Description**

**Field of invention**

The invention relates to a cable selected from a low voltage (LV) power cable operating at voltage levels less than 10 kV or to a communication cable, or to a combination thereof, preferably to a combined communication and direct current (DC) LV submarine repeater cable, as well as to a preparation process of such cable.

**Background art**

The cables are commonly produced by extruding the layers on a conductor. A typical LV power cable comprises an electrical conductor comprising one or more metal wires and the electrical conductor is surrounded by at least one layer, such as an insulation layer. A typical communication cable comprises a communication conductor comprising one or more communication wires, such as one or more optical fibres.

Submarine communication cables have been used for more than 150 years. Previously such cables have transmitted the information as electric signals, but nowadays optical fibre cables which transmit the information as optical signals have been used to overcome the increasing demands.

Generally, an optical fibre submarine cable comprise a bundle of optical fibres, usually up to about 15-20 fibres, protected by a surrounding insulation and an external jacket. To provide sufficient mechanical strength to the cable it is usually armoured, i. e. it typically includes mechanically protective metallic wires (provide stiffness), preferably steel wires, incorporated in the construction such that these may surround the bundle of optical fibres.

In an optical fibre submarine cable that covers large distances such as between two continents, the optical signal is gradually attenuated with increasing distance. To overcome this problem the signal is amplified at certain intervals such as each 10 to 12 kilometers. The amplification of the signal is done by underwater amplifiers called repeaters. One repeater is provided in association with the optical fibre cable every 10 to 12 kilometer. Such cables are also called optical fibre submarine repeater cables. The repeaters are powered by low voltage direct current (DC) cable (typically with a maximum voltage of about 10 kV) from the ends of the system. Such low voltage DC cable is normally integrated with the optical fibre cable by providing the optical fibre cable with a central LV DC voltage conductor in the form of a conducting metal tube (i.e. tubular conductor), preferably of copper, that surrounds and protects the optical fibre bundle. The conducting metal tube may also surround the previously mentioned typical mechanically protecting metallic wire armour and optional other layers arranged around the optical fibres. The tubular LV DC voltage conductor is then surrounded by an insulation layer and an external jacket that may be combined into one single combined insulation/jacket layer. Moreover the insulation/jacketing layer may optionally be further surrounded by other layers, such as further armouring wire layer. The layer structure of the submarine cable depends on the sea area. Typically so called light weight submarine cables have no armouring wire layer surrounding the jacketing or the combined insulation/jacketing layer and are used in deep sea areas, whereas the submarine cables, where the jacketing or the combined insulation/jacketing layer is further surrounded by an armouring wire layer, is often used in shallower sea area.

As well known the electrical properties of the direct current (DC) cable are different alternating current (AC) cable applications. The meaning of DC and AC cables and the operation principles thereof are well known in the state of art.

There is a continuous need to improve the polymer materials for cable layers including communication LV cable layers, e.g. in terms of electrical properties.
The invention and further objects and benefits thereof are described and defined in details below.

US 5 889 117 discloses a composition for electrical cables comprising an ethylene/octene copolymer, at least one additional polymer and a hydrotalcite present at 0.9 wt.% concentration in the Examples. However, those examples contain hydrotalcite alongside carbon black, which is added in an amount to render those compositions semi-conductive. They are not insulators as required for compositions of the invention. Moreover, the levels of hydrotalcite in US 5 889 117 are outside the scope of the present invention.

Figures

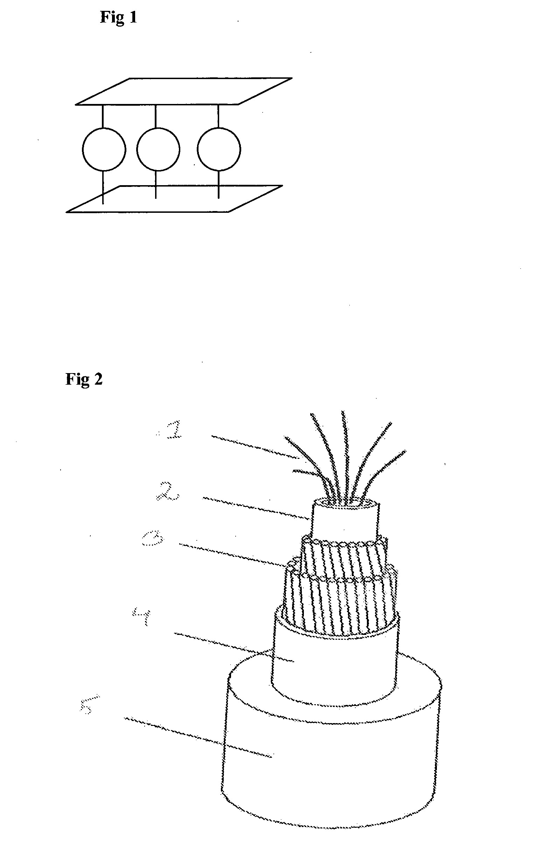

Figure 1 is a schematic partial section of two lamellas and an interlayer in between to illustrate generally the lamellar structure of a preferable anion exchanger additive as the ion exchanger additive (b). The stable lamella layers are shown as continuous layers and the round shaped species illustrate the exchangeable anions of interlayers.
Figure 2 shows a schematic picture of an preferable embodiment of the cable of the invevtion which is a fibre optic cable for repeatered submarine systems. Explanation of the numbered parts "1-5": "1" communication conductor (in this embodiment optical fibres), "2" loose tube, "3" metallic wire armour, "4" electrical conductor (in this embodiment copper tube), "5" at least one layer formed from polymer (a) (in this embodiment an insulation/jacketing layer formed from the polymer (a) which is polyethylene produced in the presence of an olefin polymerisation catalyst)

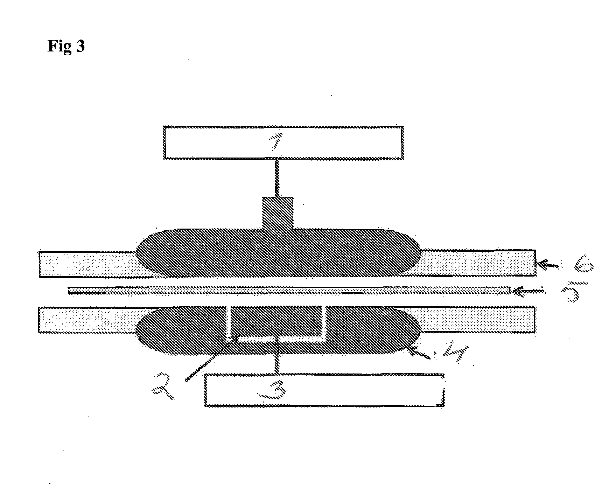

Figure 3 shows a schematic picture of the measurement setup used in the DC conductivity method as described under "Determination methods". Explanation of the numbered parts "1-6": "1" Connection to high voltage; "2" Measuring electrode; "3" Electrometer/Pico Ammeter; "4" Brass electrode; "5" Test sample; "6" Si-rubber.

Description of the invention

The present invention provides a cable (referred herein below also shortly as "cable") selected from

(i) a low voltage (LV) power cable operating at voltage levels less than 10 kV and comprising an electrical conductor which is surrounded by at least one layer selected from an insulation layer, a jacketing layer or a combined insulation and jacketing layer comprising a non cross-linked polymer composition which comprises

  (a) a polymer, and
  (b) an ion exchanger additive; or

(ii) a communication cable comprising a communication conductor which is surrounded by at least one layer comprising a non cross-linked polymer composition which comprises

  (a) a polymer, and
  (b) an ion exchanger additive;

wherein the level of ion exchange additive is less than 0.8 wt% based on the total weight of the non cross-linked polymer composition;

wherein the polymer (a) is a polyolefin which is a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers;

and wherein the non cross-linked polymer composition comprises the polymer (a) in an amount of at least 50 wt%.

Unexpectedly, the polymer composition of the at least one layer of the cable of the invention comprising (a) a polymer together with (b) an ion exchanger additive has advantageous electrical properties. Namely, the polymer composition has surprisingly reduced, i.e. low, electrical DC conductivity. "Reduced" or "low" electrical DC conductivity as used herein interchangeably means that the value obtained from the DC conductivity measurement as defined below under "Determination methods" is low, i.e. reduced.

Without binding to any theory it is believed that the ion exchanger additive (b) captures the ionic species which worsen (increase) the electrical DC conductivity, for instance anionic species, such as chlorine, which can be present in the polymer (a).

Accordingly, the polymer composition is very desirable for electrical and communication applications, preferably for wire and cable applications, more preferably for a LV power cable or communication cable applications in demanding environments, and particularly for LV power cables or communication cables, or combinations thereof , more particularly for combined low voltage and communication cables for submarine cable applications.

The polymer composition of the at least one layer of the cable of the invention as defined above or below or in claims is referred herein below also shortly as "polymer composition of the invention" or "polymer composition". The polymer components thereof as defined above or below are also shortly referred herein as "polymer (a)", or "polyolefin (a)" and, respectively, "ion exchanger additive (b)".

The term "electrical conductor" means herein above and below that the conductor comprises one or more electrical wires, preferably one or more metal wires. Moreover, the cable may comprise one or more such electrical conductors. The term "communication conductor" means herein above and below that the conductor comprises one or more communication wires, preferably one or more optical fibres, more preferably more than one optical fibre. Moreover, the cable may comprise one or more such communication conductors. The electrical conductors and communication conductors and the structures thereof are well known in the field.

The cable of the invention is preferably the LV power cable (i), more preferably a direct current (DC) LV power cable comprising an electrical conductor surrounded by at least one layer which is selected from an insulation layer, a jacketing layer or a combined insulation/jacketing layer and which comprises, preferably consists of, a non crosslinked polymer composition comprising

  (a) a polymer, and

(b) an ion exchanger additive; as defined above, below or in claims.

The term "combined insulation/jacketing layer" as defined above, below or in claims means herein that said layer functions both as an insulation and as a jacketing layer. Thus no further polymeric jacketing layer is needed, if desired. Naturally the cable can comprise further layers for further purposes, such as an armour wire layer.

The preferred embodiment of the cable of the invention is the LV power cable (i) which is (iii) a direct current (DC) LV power cable (referred herein below also shortly as "cable (iii)") comprising an electrical conductor and further comprising a communication conductor, wherein the communication conductor and electrical conductor are surrounded by at least one layer which is selected from an insulation layer, a jacketing layer or a combined insulation/jacketing layer and which comprises, preferably consists of, a non crosslinked polymer composition comprising

(a) a polymer, and
(b) an ion exchanger additive; as defined above, below or in claims.

The combined electrical conductor and communication conductor systems and the structures thereof are well known in the field.

The more preferable cable is the cable (i), (ii) or (iii), more preferably the cable (iii), as defined above, below or in claims, wherein the at least one layer is a combined insulation/jacketing layer which comprises, preferably consists of, a non crosslinked polymer composition comprising

(a) a polymer, and
(b) an ion exchanger additive; as defined above, below or in claims.

The cable (ii) or (iii), more preferably the cable (iii), comprises a communication conductor comprising one or more communication wires which are preferably one or more optical fibres.

The electrical conductor is preferably a copper or aluminium conductor.

The cable (iii) is the most preferred cable of the invention and is preferably a direct current (DC) LV power cable for repeatered submarine cable applications. Such cables for repeatered submarine cable applications are well known and also exemplified in the above back ground art description and also known and referred herein as "submarine repeater cables".

The most preferred embodiment of the preferred cable (iii) is a direct current (DC) LV power cable (iii) comprising a conductor system, which comprises a tubular electrical conductor surrounding a communication conductor which preferably comprises one or more optical fibres, and which conductor system is surrounded by at least one layer which is selected from an insulation layer or a combined insulation/jacketing layer, more preferably, which is a combined insulation/jacketing layer, comprising, preferably consisting of, a non crosslinked polymer composition which comprises

(a) a polymer, and
(b) an ion exchanger additive; and said cable (iii) is for repeatered submarine cable applications. This even more preferred cable (iii) is known as and referred herein also as an "optical fibre submarine repeater cable"

It is evident that the cable, more preferably the cable (iii), can comprise further layers used in the intended application field, such as layers surrounding the communication conductor, electrical conductor or the at least one layer comprising the polymer composition of the invention, such as adhesive layers, jacketing layers, other protective layers, like armour layers, screens, or any combinations thereof.

In the preferred embodiment of the submarine repeater cable, preferably of the optical fibre submarine repeater cable, the electrical conductor is of tubular shape and surrounds the communication conductor which preferably comprises optical fibres. Accordingly, there can be further layers between the tubular electrical conductor and optical fibre bundle, such as an armour layer of mechanically protective metallic wires, preferably steel wires, bound around the optical fibre bundle. Moreover, depending on the sea area, wherein the cable (iii) is to be used, there may optionally be an armour layer of protective metallic wires also around the insulation, jacketing or combined insulation/jacketing layer, either in direct contact or around further layers arranged in between.

The polymer (a) of the polymer composition of the at least one layer, preferably of the insulation layer, more preferably of the combined insulation/jacketing layer, is a polyolefin produced (=polymerised) in the presence of an olefin polymerization catalyst.

"Polyolefin produced in the presence of an olefin polymerisation catalyst" is also often called as "low pressure polyolefin" to distinguish it clearly from LDPE. Both expressions are well known in the polyolefin field. Furthermore, "low density polyethylene", LDPE, is thus a polyethylene produced in a high pressure process. Typically the polymerization of ethylene and optional further comonomer(s) in the high pressure process is carried out in the presence of an initiator(s).

The meaning of LDPE polymer is well known and documented in the literature. Although the term LDPE is an abbreviation for low density polyethylene, the term is understood not to limit the density range, but covers the LDPE-like HP polyethylenes with low, medium and higher densities. The term LDPE describes and distinguishes only the nature of HP polyethylene with typical features, such as different branching architecture, compared to the PE produced in the presence of an olefin polymerisation catalyst.

For instance, polyolefins produced in the presence of an olefin polymerization catalyst typically contain catalyst residues, such as anionic species, typically halogens, often chlorine. Therefore acid scavengers have been added to the produced polyolefin to protect e.g. the processing equipment against corrosion caused by the undesirable residues, such as hydrochloric acid formed from chlorine based residues. In the prior art the conventionally used acid scavengers have been found to increase the electrical DC conductivity of the polymer which is highly undesirable for the power cable layer material in demanding end applications. The ion exchanger additive (b) of the polymer composition of the invention captures the undesirable ionic catalyst residues effectively and lowers markedly the electrical DC conductivity of a polyolefin produced by an olefin polymerization catalyst. As a result, the use of conventional acid scavengers with undesirable effect on electrical DC conductivity can be avoided. The invention is thus very advantageous also for polyolefins, which have been produced by an olefin catalyst, and particularly for their use in electrical and communication applications, preferably in cable applications, and particularly advantageous for cable (iii) applications, more preferably for submarine repeater cable applications.

As to the ion exchanger additive (b) of the polymer composition:

The ion exchanger additive (b) of the polymer composition of the invention can be added to the polymer composition as such, i.e. neat, or as an additive composition as supplied by additive producers, which may contain e.g. a carrier material, e.g. a carrier polymer, and optionally further additives. Moreover, such ion exchanger additive (b) or the additive composition thereof can be added to the polymer composition as such, e.g. as supplied by the additive producer, or in a further carrier material, e.g. in a polymer carrier, for instance in a so called master batch (MB). The amount of the ion exchanger additive (b) as given below and claims is the weight (amount) of said ion exchanger additive (b) as such, i.e. neat, based on the total weight (amount) (100 wt%) of the polymer composition.

The ion exchanger additive (b) of the polymer composition of the invention is preferably an inorganic ion exchanger additive, more preferably an inorganic anion exchanger additive. Furthermore preferably the anion exchanger additive (b) can exchange anions by halogens (i.e. capture halogens), preferably at least chlorine based species. Further preferably the ion exchanger additive (b) has a lamellar structure.

The preferred embodiment of the ion exchanger additive (b) is a lamellar anion exchanger, preferably a lamellar anion exchanger which comprises anionic interlayers. The preferable lamellar ion exchanger additive (b) comprises lamella layers which form the stable host lattice and the exchangeable anionic interlayers are between said lamellas. Anionic interlayers mean herein that the interlayers comprise anions which are weakly bonded to the lamella layers and exchangeable with the anionic species present in the polymer (a) of the polymer composition. Figure 1 illustrates generally the lamellar structure (a schematic partial section showing two lamellas and an interlayer in between) of an anion exchanger additive as the preferable ion exchanger additive (b). In this preferred embodiment the interlayers of the lamellar anion exchanger (b) preferably comprise $CO_3^{2-}$ anions that are exchangeable with the anionic species present in the polymer composition, such as in polymer (a). Moreover, in this preferred embodiment the stable lamellas comprise preferably cation species selected e.g. from any of Mg-, Al-, Fe-, Cr-, Cu-, Ni- or Mn-cations, or any mixtures thereof, more preferably at least from $Mg^{2+}$ - cations, and more preferably from $Mg^{2+}$ and $Al^{3+}$ -cations, based species.

In this preferred embodiment the most preferred ion exchanger additive (a) is a lamellar anion exchanger additive of hydrotalcite type, preferably a lamellar anion exchanger additive of a synthetic hydrotalcite type comprising anionic interlayers which comprise exchangeable $CO_3^{2-}$ anions, even more preferably a lamellar anion exchanger additive of synthetic hydrotalcite type having a general formula $Mg_x R_y^{(3+)}(OH)_z(CO_3)_k * nH_2O$, wherein $R^{(3+)}$ = Al, Cr or Fe, preferably Al. In said general formula, preferably, x is between 4-6; y is 2; z is between 6-18, k is 1 and n is between 3-4. It is evident that the ratios can vary, depending e.g. of the amount of the crystal water etc. As a non-limiting example only a general formula $Mg_6 R_2^{(3+)}(OH)_{16}CO_3 * 4H_2O$, wherein $R^{(3+)}$ = Al, Cr or Fe, preferably Al, can be mentioned.

Moreover in this preferred embodiment the ion exchanger additive (b), preferably the hydrotalcite as specified above, below or in claims, can be modified, for instance surface treated, as well known in the art.

The ion exchanger additives (b) suitable for the present invention are e.g. commercially available. Amongst the preferred ion exchanger additives (b), a commercially available synthetic hydrotalcite (IUPAC name: dialuminium hexamagnesium carbonate hexadecahydroxide, CAS no. 11097-59-9), can be mentioned, such as supplied by Kisuma Chemicals under the commercial name DHT-4V.

The amount of the polymer (a), , in the polymer composition of the invention is at least 50 wt%, preferably at least 60 wt%, more preferably at least 70 wt%, more preferably at least 75 wt%, more preferably from 80 to 100 wt% and more preferably from 85 to 100 wt%, of the total weight of the polymer component(s) present in the polymer composition. The preferred polymer composition consists of the polymer (a), , as the only polymer component. The expression means that the polymer composition does not contain further polymer components, but the polymer (a), , as the sole polymer component. However, it is to be understood herein that the polymer composition may comprise further components other than the polymer (a) and the ion exchanger additive (b), such as further additives which may, as the ion exchanger additive (b), optionally be added in a mixture with a carrier polymer, i.e. in so called master batch.

The amount of the ion exchanger additive (b), preferably the hydrotalcite as defined above, below or in claims, naturally depends on the desired end application (e.g. the desired conductivity level) and can be adapted by a skilled person. Preferably, the polymer composition comprises the ion exchanger additive (b), preferably the hydrotalcite, as defined above, below or in claims, as such, i.e. neat, in an amount of less than 0.8 wt%, preferably from 0.000001 to 0.7 wt%, preferably from 0.000005 to 0.6 wt%, more preferably from 0.000005 to 0.5 wt%, more preferably from 0.00001 to 0.1 wt%, more preferably from 0.00001 to 0.08 wt%, more preferably from 0.00005 to 0.07 wt%, more preferably from 0.0001 to 0.065 wt%, more preferably from 0.0001 to 0.06 wt%, more preferably from 0.0003 to 0.055 wt%, more preferably from 0.0005 to 0.05 wt%, more preferably from 0.001 to 0.05 wt%, more preferably from 0.0015 to 0.05 wt%, more preferably from 0.0020 to 0.05 wt%, more preferably from 0.0030 to 0.05 wt%, more preferably from 0.0035 to 0.05 wt%, more preferably from 0.0040 to 0.05 wt%, more preferably from 0.0045 to 0.05 wt%, more preferably from 0.005 to 0.05 wt%, based on the total weight of the polymer composition.

The polymer composition has preferably an electrical conductivity of 100 fS/m or less, preferably 90 fS/m or less, more preferably of < 0.01 (lower values not detectable by the DC conductivity measurement) to 80 fS/m, more preferably of < 0.01 to 70 fS/m, more preferably of < 0.01 to 60 fS/m, more preferably of < 0.01 to 10 fS/m, more preferably of < 0.01 to 8.00 fS/m, more preferably of < 0.01 to 6.00 fS/m, more preferably of < 0.01 to 5.00 fS/m, more preferably of < 0.01 to 4.00 fS/m, most preferably of 0.01 to 3.5 fS/m, most preferably of 0.02 to 3.0 fS/m, even more preferably of < 0.01 to 2.5 fS/m, even more preferably of < 0.01 to 2.0 fS/m, even more preferably of < 0.01 to 1.0 fS/m when measured according to DC conductivity method as described under "Determination Methods".

The polymer composition is non-crosslinked.

Accordingly, wherein the polymer composition comprises no crosslinking agent, the electrical DC conductivity as described under the "Determination method" is measured from a sample of said polymer composition which is non-crosslinked (i.e. does not contain a crosslinking agent and has not been crosslinked with a crosslinking agent). The conductivity measurement from a non-crosslinked olymer composition sample is described under "Determination Methods".

"Without crosslinking", "not crosslinked" or "non-crosslinked" as used herein above, below or in claims means that no crosslinking agent is added to the polymer composition for crosslinking the composition (also known as thermoplast). Similarly, "comprises no crosslinking agent" means herein the polymer composition does not comprise any crosslinking agent which would have been added to crosslink the composition.

The electrical conductivity of a non-crosslinked polymer composition is surprisingly low.

Additionally, the polymer composition of the invention may contain, in addition to the polymer (a), the ion exchanger additive (b) further component(s) such as polymer component(s) and/or additive(s), preferably additive(s), such as any of antioxidant(s), scorch retarder(s) (SR), crosslinking booster(s), stabiliser(s), processing aid(s), flame retardant additive(s), water tree retardant additive(s), further acid or ion scavenger(s), inorganic filler(s) and voltage stabilizer(s), as known in the polymer field. The polymer composition comprises preferably conventionally used additive(s) for W&C applications, such as one or more antioxidant(s) and optionally one or more scorch retarder(s), preferably at least one or more antioxidant(s). The used amounts of additives are conventional and well known to a skilled person.

As non-limiting examples of antioxidants e.g. sterically hindered or semi-hindered phenols, aromatic amines, aliphatic sterically hindered amines, organic phosphites or phosphonites, thio compounds, and mixtures thereof, can be mentioned.

The invention further provides a use of a non cross-linked polymer composition comprising

(a) a polyolefin which is a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers, and

(b) an ion exchanger additive; as defined in any of the preceding claims 8-12, for producing an electrical or communication device comprising said polymer composition, for producing an insulation layer of an electrical or communication device.

In such uses the polymer composition is non-crosslinked. Such devices are e.g. cables, joints including termination joints in cable applications, capacitor films etc. The most preferred use of the invention is the use of said polymer composition for producing a insulation layer of a cable (i), cable (ii) or cable (iii), including the preferable subgroups thereof, more preferably cable (iii), including the preferable subgroups thereof; as defined above, below or in claims.

The use of the invention, cable of the invention and the further properties and preferable embodiments thereof, as well as the production process of the cable are further described later below.

Preferably, the polymer composition is avoid of, i.e. does not comprise, a carbon black. Also preferably, the polymer composition is avoid of, does not comprise, flame retarding additive(s) in such amounts conventionally used for acting as "flame retardants", e.g. a metal hydroxide containing additives in flame retarding amounts.

The following preferable embodiments, properties and subgroups of the polymer (a) and the ion exchanger additive (b) components suitable for the polymer composition of the invention are independently generalisable so that they can be used in any order or combination to further define the preferable embodiments of the polymer composition and the cable produced using the polymer composition.

Polymer (a)

The polymer (a) is a polyolefin produced (=polymerised) in the presence of an olefin polymerization catalyst.

"Olefin polymerisation catalyst" means herein a conventional coordination catalyst. It is preferably selected from a Ziegler-Natta catalyst, single site catalyst which term comprises a metallocene and a non-metallocene catalyst, or a chromium catalyst, or any mixture thereof.

Term "Polyethylene" (PE) means homopolymer of ethylene or a copolymer of ethylene with one or more comonomer(s).

Low pressure PE can be unimodal or multimodal with respect to molecular weight distribution (MWD= Mw/Mn). Generally, a polymer comprising at least two polymer fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

The term "multimodal" means herein, unless otherwise stated, multimodality at least with respect to molecular weight distribution (MWD= Mw/Mn) and includes also bimodal polymer.

A multimodal low pressure PE usable in the present invention comprises a lower weight average molecular weight (LMW) component (A) and a higher weight average molecular weight (HMW) component (B). Said LMW component has a lower molecular weight than the HMW component.

Naturally, the multimodal low pressure PE may in addition or alternatively to multimodality with respect to MWD be multimodal with respect to density and comonomer content. I.e. the LMW and HMW components may have different comonomer content or density, or both.

Preferably the low pressure PE independently have a MWD of at least 2.0, preferably of at least 2.5, preferably of at least 2.9, preferably from 3 to 30, more preferably from 3.3 to 25, even more preferably from 3.5 to 20, preferably 3.5 to 15. A unimodal PE or PP has typically a MWD of 3.0 to 10.0.

The low pressure PE can be a copolymer of ethylene or, respectively, of propylene (random or heterophasic), with one or more comonomer(s). Comonomer as used herein means monomer units other than ethylene, which are copolymerisable with ethylene. In "random copolymer" the comonomer(s) in said copolymer is distributed randomly, i.e. by statistical insertion of the comonomer units, within the copolymer chain.

Preferably, the low pressure PE copolymer, if used as the polyolefm (a), can typically be a binary copolymer, i.e. e.g. the PE copolymer contains ethylene and one comonomer, or a terpolymer, i.e. e.g. the PE copolymer contains ethylene and two or three comonomers.

The low pressure PE copolymer, if used as the polyolefin (a), is preferably a copolymer of ethylene with one or more olefin comonomer(s), preferably with at least C3-20 alpha olefin, more preferably with at least one C4-12 alpha-olefin, more preferably with at least one C4-8 alpha-olefin, e.g. with 1-butene, 1-hexene or 1-octene. The amount of comonomer(s) present in a PE copolymer is from 0.1 to 15 mol%, typically 0.25 to 10 mol-%.

The polyolefin (a) is a low pressure PE selected from a very low density ethylene copolymer (VLDPE), a linear low density ethylene copolymer (LLDPE), a medium density ethylene copolymer (MDPE) or a high density ethylene homopolymer or copolymer (HDPE). These well known types are named according to their density area. The term VLDPE includes herein PEs which are also known as plastomers and elastomers and covers the density range of from 850 to 909 kg/m$^3$. The LLDPE has a density of from 909 to 930 kg/m$^3$, preferably of from 910 to 929 kg/m$^3$, more preferably of from 915 to 929 kg/m$^3$. The MDPE has a density of from 930 to 945 kg/m$^3$, preferably 931 to 945 kg/m$^3$The

HDPE has a density of more than 945 kg/m$^3$, preferably of more than 946 kg/m$^3$, preferably form 946 to 977 kg/m$^3$, more preferably form 946 to 965 kg/m$^3$.

LLDPE, MDPE or HDPE are preferable types of low pressure PE for use as the polyolefin (a) of the present invention. Such LLDPE, MDPE or HDPE can be unimodal or multimodal. The multimodality contributes to the mechanical and processing properties, such as thermal stress cracking (TSCR).

Most preferred polyolefin (a) as the polymer (a) of the polymer composition of the invention is a unimodal or multimodal LLDPE copolymer, a unimodal or multimodal MDPE copolymer or a unimodal or multimodal HDPE copolymer or homopolymer, more preferably a polyethylene produced in the presence of an olefin polymerisation catalyst which has a density of from 920 to 960 kg/m$^3$, more preferably 930 to 955 kg/m$^3$, even more preferably 935 to 950 kg/m$^3$and is unimodal or multimodal with respect to molecular weight distribution.

The low pressure PE has preferably an MFR$_2$ of up to 1200 g/10 min, such as of up to 1000 g/10 min, preferably of up to 500 g/10 min, preferably of up to 400 g/10 min, preferably of up to 300 g/10 min, preferably of up to 200 g/10 min, preferably of up to 150 g/10 min, preferably from 0.01 to 100, preferably from 0.01 to 50 g/10 min, preferably from 0.01 to 40.0 g/10 min, preferably of from 0.05 to 30.0 g/10 min, preferably of from 0.1 to 20.0 g/10 min, more preferably of from 0.2 to 15.0 g/10 min.

Suitable low pressure PE as the polyolefin (a) are as such well known and can be e.g. commercially available or, alternatively, can be produced according to or analogously to conventional polymerisation processes which are well documented in the literature.

The olefin polymerisation catalyst can be selected from well known coordination catalysts, preferably from Ziegler Natta, single site, which term comprises well known metallocene and non-metallocene catalyst, or Chromium catalyst, or any mixtures thereof. It is evident for a skilled person that the catalyst system comprises a co-catalyst. Suitable Ziegler Natta catalysts for low pressure PE are described e.g. in EP0810235 or EP0688794 which are all incorporated by reference herein. Suitable Ziegler Natta catalysts for PP are described e.g. in WO03000754 or EP 1 484 345, which are all incorporated by reference herein. As known PP catalysts typically may contain internal or external donors. As well known the catalytically active catalyst component(s), such as the catalytically active component of the Ziegler Natta catalyst, is normally combined with an activator. Moreover the catalyst system can be non-supported or supported on a carrier, such as external carrier, like silica-based or Mg-based carrier.

The unimodal low pressure PE can be produced by a single stage polymerisation in a single reactor in a well known and documented manner. The multimodal (e.g. bimodal) low pressure PE , can be produced e.g. by blending mechanically together two or more separate polymer components or, preferably, by in-situ blending during the polymerisation process of the components. Both mechanical and in-situ blending are well known in the field. Accordingly, the preferable in-situ blending means the polymerisation of the polymer components under different polymerisation conditions, e.g. in a multistage, i.e. two or more stage, polymerization or by the use of two or more different polymerization catalysts, including multi- or dual site catalysts, in a one stage polymerization, or by use a combination of multistage polymerisation and two or more different polymerisation catalysts. In the multistage polymerisation process the polymer is polymerised in a process comprising at least two polymerisation stages. Each polymerisation stage may be conducted in at least two distinct polymerisation zones in one reactor or in at least two separate reactors. Preferably, the multistage polymerisation process is conducted in at least two cascaded polymerisation zones. Polymerisation zones may be connected in parallel, or preferably the polymerisation zones operate in cascaded mode. The polymerisation zones may operate in bulk, slurry, solution, or gas phase conditions or in any combinations thereof. In the preferred multistage process a first polymerisation step is carried out in at least one slurry, e.g. loop, reactor and the second polymerisation step in one or more gas phase reactors. One preferable multistage process is described in EP517868. In general, the temperature in the low pressure PE polymerisation is typically from 50 to 115 °C, preferably from 60 to 110 °C. The pressure is from 1 to 150 bar, preferably from 10 to 100 bar. The precise control of polymerisation conditions can be performed by using different types of catalyst and using different comonomer and/or hydrogen feeds. Prepolymerisation may precede the actual polymerisation step(s), as well known in the field.

The obtained low pressure PE, polymerisation product may be compounded in a known manner and optionally with additive(s) and pelletised for further use.

End uses and end applications of the polymer composition of the invention

The invention thus is most preferably used in a cable selected from a cable (i), cable (ii), or cable (iii), more preferably from cable (iii); including the preferable subgroups thereof which can be combined in any order with the preferable subgroups and properties of the polymer composition and the components thereof; as defined above, below or in claims.

Moreover, the preferred cable of the invention is a direct current (DC) LV power cable (iii) for repeatered submarine cable applications, i.e. a submarine repeater cable, more preferably an optical fibre submarine repeater cable; as defined above, below or in claims.

The invention also provides a process for producing a cable selected from

- a process for producing (i) a low voltage (LV) power cable operating at voltage levels less than 10 kV and comprising an electrical conductor which is surrounded by at least one layer, wherein the process comprises the steps of
- applying on an electrical conductor, preferably by (co)extrusion, at least one layer which is an insulation layer, a jacketing layer or a combined insulation/jacketing layer, more preferably a combined insulation/jacketing layer, and comprises, preferably consists of, the non cross-linked polymer composition comprising

   (a) a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers, and
   (b) an inorganic ion exchanger additive;

- a process for producing (ii) a communication cable comprising a communication conductor which is surrounded by at least one layer, wherein the process comprises the steps of
- applying on a communication conductor, preferably by (co)extrusion, at least one layer which is preferably an insulation layer or a combined insulation/jacketing layer, more preferably a combined insulation/jacketing layer, and comprises, preferably consists of, the non cross-linked polymer composition comprising

   (a) a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers, and
   (b) an inorganic ion exchanger additive; and preferably,

- a process for producing (iii) a direct current (DC) LV power cable comprising an electrical conductor and further comprising a communication conductor, wherein the conductor system of communication conductor and electrical conductor are surrounded by at least one layer, wherein the process comprises the steps of
- applying on said conductor system, preferably by (co)extrusion, at least one layer which is an insulation layer, jacketing layer or a combined insulation/jacketing layer, more preferably a combined insulation/jacketing layer, and comprises, preferably consists of, the non cross-linked polymer composition comprising

   (a) a polyolefin which is a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers, and
   (b) an inorganic ion exchanger additive.

The most preferred process of the invention is for producing an optical fibre submarine repeater cable, i.e. a direct current (DC) LV power cable (iii) for submarine repeater applications, comprising a conductor system, which comprises a tubular electrical conductor surrounding a communication conductor which preferably comprises one or more optical fibres, and which conductor system is surrounded by at least one layer, wherein the process comprises the steps of

- applying on said conductor system, preferably by (co)extrusion, at least one layer, which is preferably an insulation layer or a combined insulation/jacketing layer, more preferably a combined insulation/jacketing layer, and comprises, preferably consists of, the non crosslinked polymer composition comprising

   (a) a polymer which is preferably a polyolefin (a), more preferably a low pressure polyethylene, and
   (b) an ion exchanger additive; as defined above, below or in claims.

The term "(co)extrusion" means herein that in case of two or more polymeric layers, said layers can be extruded in separate steps, or at least two or all of said layers can be coextruded in a same extrusion step, as well known in the art. The term "(co)extrusion" means herein also that all or part of the polymeric layer(s) are formed simultaneously using one or more extrusion heads.
As well known a meltmix of the polymer composition or component(s) thereof, is applied to form a layer. Meltmixing means mixing above the melting point of at least the major polymer component(s) of the obtained mixture and is carried out for example, without limiting to, in a temperature of at least 10-15°C above the melting or softening point of polymer component(s). The mixing step (a) can be carried out in the cable extruder. The meltmixing step may comprise a separate mixing step in a separate mixer, e.g. kneader, arranged in connection and preceding the cable extruder of the cable production line. Mixing in the preceding separate mixer can be carried out by mixing with or without external heating (heating with an external source) of the component(s).

As well known, the polymer composition of the invention can be produced before or during the cable production process. Moreover the polymer composition of the invention can comprise part or all of the component(s) of the final composition, before introducing to the (melt)mixing step a) of the cable production process.

Preferably, the polymer composition of the invention is provided to the cable production process in form of powder, grain or pellets. Pellets mean herein generally any polymer product which is formed from reactor-made polymer (obtained directly from the reactor) by post-reactor modification to a solid polymer particles. A well-known post-reactor modification is pelletising a meltmix of a polymer product and optional additive(s) in a pelletising equipment to solid pellets. Pellets can be of any size and shape. Moreover, the the low pressure polyethylene, and the ion exchanger additive (b) can be combined in a same powder, grain or pellet product, which thus contains a solid polymer mixture of the low pressure polyethylene, and the ion exchanger additive (b). Alternatively, the low pressure polyethylene, and the ion exchanger additive (b), as defined above, below or in claims, are provided separately and combined during the cable production process.

Preferably, the low pressure polyethylene, and the ion exchanger additive (b) of the polymer composition can be premixed, e.g. meltmixed together and pelletised, before providing to the mixing step (a).

The polymer composition comprising the the low pressure polyethylene, and the ion exchanger additive (b), as defined above, below or in claims, may also comprise optional further component(s), such as further additive(s). In case of the optional further component(s), such as further additive(s), of the polymer composition of the invention and, respectively, part or all of the component(s) of the first or second semiconductive compositions, are added to the polyolefin during the cable production process, then the addition(s) can take place at any stage during the mixing step (a), e.g at the optional separate mixer preceding the cable extruder or at any point(s) of the cable extruder. The addition of the optional additive(s) can be made simultaneously or separately as such, preferably in liquid form, or in a well known master batch, and at any stage during the mixing step (a).

It is preferred that the meltmix of the polymer composition obtained from (melt)mixing step (a) consists of the low pressure polyethylene, of the invention as the sole polymer component(s). The optional and preferable additive(s), preferably antioxidant(s), can be added to polymer composition as such or as a mixture with a carrier polymer, i.e. in a form of so-called master batch.

The processing temperatures and devices are well known in the art, e.g. conventional mixers and extruders, such as single or twin screw extruders, are suitable for the process of the invention.

The thickness of the at least one layer, preferably an insulation layer or a combined insulation/jacketing layer, more preferably of a combined insulation/jacketing layer, of the cable (i) or cable (iii), preferably of cable (iii), which is more preferably a submarine repeater cable, more preferably an optical fibre submarine repeater cable, of the invention can vary and depends on the intended voltage level of the end application cable and can be chosen accordingly. As a conventionally used example, such layer is typically up to 10 mm, usually up to 7 mm, such as 2-7 mm, and preferably from 2 to 5.5 mm.

## Determination methods

Unless otherwise stated in the description or experimental part the following methods were used for the property determinations.

**Wt%:** % by weight

**Melt Flow Rate**

The melt flow rate (MFR) is determined according to ISO 1133 and is indicated in

g/10 min. The MFR is an indication of the flowability, and hence the processability, of the polymer. The higher the melt flow rate, the lower the viscosity of the polymer. The MFR is determined at 190 °C for polyethylene and at 230 °C for polypropylene. MFR may be determined at different loadings such as 2.16 kg ($MFR_2$) or 21.6 kg ($MFR_{21}$).

## Molecular weight

Mz, Mw, Mn, and MWD are measured by Gel Permeation Chromatography (GPC) according to the following method:

The weight average molecular weight Mw and the molecular weight distribution (MWD = Mw/Mn wherein Mn is the number average molecular weight and Mw is the weight average molecular weight; Mz is the z-average molecular weight) is measured according to ISO 16014-4:2003 and ASTM D 6474-99. A Waters GPCV2000 instrument, equipped with refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert-butyl-4-methyl-phenol) as solvent at 140 °C and at a constant flow rate of 1 mL/min. 209.5 µL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

**Comonomer contents**

a) Comonomer content in random copolymer of polypropylene:
Quantitative Fourier transform infrared (FTIR) spectroscopy was used to quantify the amount of comonomer. Calibration was achieved by correlation to comonomer contents determined by quantitative nuclear magnetic resonance (NMR) spectroscopy. The calibration procedure based on results obtained from quantitative $^{13}$C-NMR spectroscopy was undertaken in the conventional manner well documented in the literature. The amount of comonomer (N) was determined as weight percent (wt%) via:

$$N = k1 \, (A \, / \, R) + k2$$

wherein A is the maximum absorbance defined of the comonomer band, R the maximum absorbance defined as peak height of the reference peak and with k1 and k2 the linear constants obtained by calibration. The band used for ethylene content quantification is selected depending if the ethylene content is random (730 cm$^{-1}$) or block-like (as in heterophasic PP copolymer) (720 cm$^{-1}$). The absorbance at 4324 cm$^{-1}$ was used as a reference band.
b) Quantification of alpha-olefin content in linear low density polyethylenes and low density polyethylenes by NMR spectroscopy:
The comonomer content was determined by quantitative 13C nuclear magnetic resonance (NMR) spectroscopy after basic assignment (J. Randall JMS - Rev. Macromol. Chem. Phys., C29(2&3), 201-317 (1989). Experimental parameters were adjusted to ensure measurement of quantitative spectra for this specific task.
Specifically solution-state NMR spectroscopy was employed using a Bruker AvanceIII 400 spectrometer. Homogeneous samples were prepared by dissolving approximately 0.200 g of polymer in 2.5 ml of deuterated-tetrachloroethene in 10 mm sample tubes utilising a heat block and rotating tube oven at 140 C. Proton decoupled 13C single pulse NMR spectra with NOE (powergated) were recorded using the following acquisition parameters: a flip-angle of 90 degrees, 4 dummy scans, 4096 transients an acquisition time of 1.6s, a spectral width of 20kHz, a temperature of 125 C, a bilevel WALTZ proton decoupling scheme and a relaxation delay of 3.0 s. The resulting FID was processed using the following processing parameters: zero-filling to 32k data points and apodisation using a gaussian window function; automatic zeroth and first order phase correction and automatic baseline correction using a fifth order polynomial restricted to the region of interest.
Quantities were calculated using simple corrected ratios of the signal integrals of representative sites based upon methods well known in the art.
c) Comonomer content of polar comonomers in low density polyethylene

(1) Polymers containing > 6 wt% polar comonomer units

Comonomer content (wt%) was determined in a known manner based on Fourier transform infrared spectroscopy (FTIR) determination calibrated with quantitative nuclear magnetic resonance (NMR) spectroscopy. Below is exemplified the determination of the polar comonomer content of ethylene ethyl acrylate, ethylene butyl acrylate and ethylene methyl acrylate. Film samples of the polymers were prepared for the FTIR measurement: 0.5-0.7 mm thickness was used for ethylene butyl acrylate and ethylene ethyl acrylate and 0.10 mm film thickness for ethylene methyl acrylate in amount of >6wt%. Films were pressed using a Specac film press at 150°C, approximately at 5 tons, 1-2 minutes, and then cooled with cold water in a not controlled manner. The accurate thickness of the obtained film samples was measured.
After the analysis with FTIR, base lines in absorbance mode were drawn for the peaks to be analysed. The absorbance peak for the comonomer was normalised with the absorbance peak of polyethylene (e.g. the peak height for butyl acrylate or ethyl acrylate at 3450 cm$^{-1}$ was divided with the peak height of polyethylene at 2020 cm$^{-1}$). The NMR spectroscopy calibration procedure was undertaken in the conventional manner which is well documented in the literature, explained below.

For the determination of the content of methyl acrylate a 0.10 mm thick film sample was prepared. After the analysis the maximum absorbance for the peak for the methylacrylate at 3455 cm$^{-1}$ was subtracted with the absorbance value for the base line at 2475 cm$^{-1}$ ($A_{methylacrylate}-A_{2475}$). Then the maximum absorbance peak for the polyethylene peak at 2660 cm$^{-1}$ was subtracted with the absorbance value for the base line at 2475 cm$^{-1}$ ($A2660 - A_{2475}$). The ratio between ($A_{methylacrylate}-A_{2475}$) and ($A_{2660}-A_{2475}$) was then calculated in the conventional manner which is well documented in the literature.

The weight-% can be converted to mol-% by calculation. It is well documented in the literature.

Quantification of copolymer content in polymers by NMR spectroscopy

The comonomer content was determined by quantitative nuclear magnetic resonance (NMR) spectroscopy after basic assignment (e.g. "NMR Spectra of Polymers and Polymer Additives", A. J. Brandolini and D. D. Hills, 2000, Marcel Dekker, Inc. New York). Experimental parameters were adjusted to ensure measurement of quantitative spectra for this specific task (e.g "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

(2) Polymers containing 6 wt.% or less polar comonomer units

Comonomer content (wt.%) was determined in a known manner based on Fourier transform infrared spectroscopy (FTIR) determination calibrated with quantitative nuclear magnetic resonance (NMR) spectroscopy. Below is exemplified the determination of the polar comonomer content of ethylene butyl acrylate and ethylene methyl acrylate. For the FT-IR measurement a film samples of 0.05 to 0.12 mm thickness were prepared as described above under method 1). The accurate thickness of the obtained film samples was measured.

After the analysis with FT-IR base lines in absorbance mode were drawn for the peaks to be analysed. The maximum absorbance for the peak for the comonomer (e.g. for methylacrylate at 1164 cm$^{-1}$ and butylacrylate at 1165 cm$^{-1}$) was subtracted with the absorbance value for the base line at 1850 cm$^{-1}$ ($A_{polar\ comonomer}-A_{1850}$). Then the maximum absorbance peak for polyethylene peak at 2660 cm$^{-1}$ was subtracted with the absorbance value for the base line at 1850 cm$^{-1}$ ($A_{2660} - A_{1850}$). The ratio between ($A_{comonomer}-A_{1850}$) and ($A_{2660}-A_{1850}$) was then calculated. The NMR spectroscopy calibration procedure was undertaken in the conventional manner which is well documented in the literature, as described above under method 1).

The weight-% can be converted to mol-% by calculation. It is well documented in the literature.

Below is exemplified how polar comonomer content obtained from the above method (1) or (2), depending on the amount thereof, can be converted to micromol or mmol per g polar comonomer as used in the definitions in the text and claims:

The millimoles (mmol) and the micro mole calculations have been done as described below.

For example, if 1 g of the poly(ethylene-co-butylacrylate) polymer, which contains 20 wt% butylacrylate, then this material contains 0.20/M$_{butylacrylate}$ (128 g/mol) = 1.56 x 10$^{-3}$ mol. (=1563 micromoles).

The content of polar comonomer units in the polar copolymer C$_{polar\ comonomer}$ is expressed in mmol/g (copolymer). For example, a polar poly(ethylene-co-butylacrylate) polymer which contains 20 wt.% butyl acrylate comonomer units has a C$_{polar\ comonomer}$ of 1.56 mmol/g. The used molecular weights are: M$_{butylacrylate}$ = 128 g/mole, M$_{ethylacrylate}$ = 100 g/mole, M$_{methylacrylate}$ = 86 g/mole).

**Density**

Low density polyethylene (LDPE): The density was measured according to ISO 1183-2. The sample preparation was executed according to ISO 1872-2 Table 3 Q (compression moulding).

Low pressure process polyethylene: Density of the polymer was measured according to ISO 1183/1872-2B.

**DC Conductivity method**

Electrical conductivity measured at 70 °C and 30 kV/mm mean electric field from a non-degassed or degassed, 1 mm plaque sample consisting of a polymer composition.

Plaque Sample preparation:

The plaques are compression moulded from pellets of the test polymer composition. The final plaques have a thickness of 1 mm and 200 × 200 mm.

The plaques are press-moulded at 130°C for 12 min while the pressure is gradually increased from 2 to 20 MPa. Thereafter the temperature is increased and reaches 180°C after 5 min. The temperature is then kept constant at 180°C for 15 min. Finally the temperature is decreased using the cooling rate 15 °C/min until room temperature is reached when the pressure is released. The plaques are immediately after the pressure release controlled for thickness variations and thereafter mounted in the test cell for conductivity measurement, in order to prevent loss of volatile substances (used for the non-degassed determination).

If the plaque is to be degassed it is placed in a ventilated oven at atmospheric pressure for 24 h at 70°C. Thereafter the plaque is again wrapped in metallic foil in order to prevent further exchange of volatile substances between the plaque and the surrounding.

Measurement procedure:

A high voltage source is connected to the upper electrode, to apply voltage over the test sample. The resulting current through the sample is measured with an electrometer or Pico-ammeter. The measurement cell is a three electrodes system with brass electrodes. The brass electrodes are placed in an oven to facilitate measurements at elevated temperature and provide uniform temperature of the test sample. The diameter of the measurement electrode is 100 mm. Silicone rubber skirts are placed between the brass electrode edges and the test sample, to avoid flashovers from the round edges of the electrodes.

The applied voltage was 30 kV DC meaning a mean electric field of 30 kV/mm. The temperature was 70°C. The current through the plaque was logged throughout the whole experiments lasting for 24 hours. The current after 24 hours was used to calculate the conductivity of the insulation. A schematic picture of the measurement setup is shown in Figure 3. Explanation of the numbered parts "1-6": "1" Connection to high voltage; "2" Measuring electrode; "3" Electrometer/Pico Ammeter; "4" Brass electrode; "5" Test sample; "6" Si-rubber.

**Experimental part**

**Components of the Reference compositions of the invention:**

MDPE: A conventional bimodal polyethylene copolymer (1-butene as the comonomer) produced in a low pressure Borstar process (a two stage process, loop reactor - gas phase reactor), has an $MFR_2$ of 1.7 g/10min (190 °C /2,16 kg) and a density of 944 kg/m$^3$. The same base resin, except that combined with another additive system than specified in table 1, is used in a commercially available grade Borstar HE6068 (supplier Borealis).

Ion exchanger additive (b): synthetic hydrotalcite (IUPAC name: dialuminium hexamagnesium carbonate hexadecahydroxide, CAS no. 11097-59-9) supplied by Kisuma Chemicals under the commercial name DHT-4V.

Antioxidant (AO1): Irganox B 225FF (Commercially available antioxidant blend consisting of 50% Irganox 1010 (CAS no. 6683-19-8) and 50% Irgafos 168 (CAS no. 31570-04-4).

Antioxidant (AO2): Tinuvin 783 FDL (Commercially available antioxidant blend consisting of 50% Tinuvin 622 (CAS no. 65447-77-0) and Chimasorb 944 (CAS no. 71878-19-8).

Acid scavenger (CaSt): Calsium stearate CAS no. 1592-23-0, commercially available.

**Compounding of the compositions:**

Polymer pellets were added to a pilot scale extruder (Prism TSE 24TC) together with additives. The obtained mixture was meltmixed in conditions given in the below table and extruded to pellets in a conventional manner.

| Set Values Temperatures [°C] | | | | | | Extruder | | | |
|--------|--------|--------|--------|--------|--------|-----|-------------|----------------|---------------|
| Zone 1 | Zone 2 | Zone 3 | Zone 4 | Zone 5 | Zone 6 | rpm | Output [kg/h] | Pressure [bar] | Filter [mesh] |
| 120 | 140 | 150 | 150 | 150 | 150 | 203 | 5.0 | 63 | 200 |

Table 1: The components of the polymer composition of the invention and the reference composition, as well as the conductivity measurements

|  | Reference Example | Inventive Example |
|---|---|---|
| MDPE* [wt%] | 100 | 100 |
| AO1** [wt%] | 0.22 | 0.22 |
| AO2** [wt%] | 0.3 | 0.3 |
| CaSt** [wt%] | 0.05 | 0 |
| Ion exchanger additive (b)** [wt%] | 0 | 0.025 |
| **Conductivity [fS/m]** | **2.6** | **0.7** |

* The wt% amounts of polymer component in table are based on the combined amount of used polymer component(s). The amount 100 wt% of polymer component in table 1 means that the polymer is the sole polymer component present in the test composition.

** The wt% amounts of ion exchanger additive (c), acid scavanger and AO are based on the final composition.

The polymer composition of the invention was used to produce an insulation layer of a cable.

A Cable was made using the polymer composition of the invention as the combined insulation/jacketing layer with layer thickness of 4.5 mm. The conductor system of the cable was a combined copper conductor and optical conductor (based on optical fibres) system. The insulation/jacketing layer was extruded on the copper conductor. The cable line in this example was a catenary Nokia Maillefer 1+2 system, but only one extrusion head was used to form the insulation layer. The obtained non-crosslinked cable is cooled in water.

The obtained cable has a low conductivity and shows the applicability of the polymer composition of the invention as a cable layer, preferably as an insulation layer, in a cable.

**Claims**

1. A cable selected from:

   (i) a low voltage (LV) power cable operating at voltage levels less than 10 kV and comprising an electrical conductor which is surrounded by at least one layer selected from an insulation layer, a jacketing layer or a combined insulation and jacketing layer comprising a non cross-linked polymer composition which comprises

   (a) a polymer, and
   (b) an ion exchanger additive; or

   (ii) a communication cable comprising a communication conductor which is surrounded by at least one layer comprising a non cross-linked polymer composition which comprises

   (a) a polymer, and
   (b) an ion exchanger additive;
   wherein the level of ion exchange additive is less than 0.8 wt% based on the total weight of the non cross-linked polymer composition;
   wherein the polymer (a) is a polyolefin which is a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers;
   and wherein the non cross-linked polymer composition comprises the polymer (a) in an amount of at least 50 wt%.

2. The cable of claim 1, wherein the LV power cable (i) is a direct current (DC) LV power cable comprising an electrical conductor surrounded by at least one layer which is selected from an insulation layer, a jacketing layer or a combined insulation/jacketing layer and which comprises a non cross-linked polymer composition comprising

(a) a polyolefin which is a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers, and
(b) an ion exchanger additive.

3. The cable of claim 1 or 2, wherein the LV power cable (i) is (iii) a direct current (DC) LV power cable comprising an electrical conductor and further comprising a communication conductor, wherein the communication conductor and electrical conductor are surrounded by at least one layer which is selected from an insulation layer, a jacketing layer or a combined insulation/jacketing layer and which comprises a non cross-linked polymer composition comprising

(a) a polyolefin which is a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers, and
(b) an ion exchanger additive.

4. The cable of any of the preceding claims, wherein the at least one layer is a combined insulation/jacketing layer which comprises, preferably consists of, a non cross-linked polymer composition comprising

(a) a polyolefin which is a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers, and
(b) an ion exchanger additive.

5. The cable of any of the preceding claims 1, 3 or 4, wherein the communication conductor comprises one or more communication wires which are one or more optical fibres.

6. The cable of any of the preceding claims, wherein the cable is a direct current (DC) LV power cable (iii) for repeatered submarine cable applications.

7. The cable of any of the preceding claims, which is a direct current (DC) LV power cable (iii) comprising a conductor system, which comprises a tubular electrical conductor surrounding a communication conductor which preferably comprises one or more optical fibres, and which conductor system is surrounded by at least one layer which is selected from an insulation layer or a combined insulation/jacketing layer, more preferably, which is a combined insulation/jacketing layer, comprising, preferably consisting of, a non cross-linked polymer composition which comprises

(a) a polyolefin which is a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers, and
(b) an ion exchanger additive; and
said cable (iii) is for repeatered submarine cable applications.

8. The cable according to any of the preceding claims, wherein the ion exchanger additive (b) is an inorganic ion exchanger additive; more preferably an inorganic anion exchanger additive; more preferably the anion exchanger additive (b) can exchange anions by halogens (i.e. capture halogens), preferably at least chlorine based species; further preferably the ion exchanger additive (b) has a lamellar structure; and further preferably is a lamellar anion exchanger additive, preferably a lamellar anion exchanger additive which comprises anionic interlayers; even further preferably said interlayers of the lamellar anion exchanger (c) comprise $CO_3^{2-}$ anions that are exchangeable with the anionic species present in the polymer composition.

9. The cable according to any of the preceding claims, wherein the ion exchanger additive (b) is an anion exchanger additive of hydrotalcite type, preferably of a synthetic hydrotalcite type, comprising anionic interlayers which comprise exchangeable $CO_3^{2-}$ anions.

**10.** The cable according to any of the preceding claims, wherein the non cross-linked polymer composition comprises the ion exchanger additive (b) as such, i.e. neat, in an amount of 0.000001 to 0.7 wt%, based on the total weight of the polymer composition.

**11.** The cable according to any of the preceding claims, wherein the polymer (a) is selected from a unimodal or multimodal LLDPE copolymer, a unimodal or multimodal MDPE copolymer or a unimodal or multimodal HDPE polymer, even more preferably the polyolefin (a) is a polyethylene produced in the presence of an olefin polymerisation catalyst which has a density of from 920 to 960 kg/m$^3$, more preferably 930 to 955 kg/m$^3$, and is unimodal or multimodal with respect to molecular weight distribution.

**12.** The cable according to any of the preceding claims, wherein the non cross-linked polymer composition comprises the polymer (a) in an amount of at least 60 wt%, more preferably at least 70 wt%, more preferably at least 75 wt%, of the total weight of the polymer component(s) present in the polymer composition.

**13.** The cable according to any of the preceding claims, wherein the at least one layer is an insulation layer or a combined insulation/jacketing layer, more preferably a combined insulation/jacketing layer.

**14.** A process for producing a cable selected from

- a process for producing (i) a low voltage (LV) power cable operating at voltage levels less than 10 kV and comprising an electrical conductor which is surrounded by at least one layer, wherein the process comprises the steps of
- applying on an electrical conductor, preferably by (co)extrusion, at least one layer which is an insulation layer, a jacketing layer or a combined insulation/jacketing layer, more preferably a combined insulation/jacketing layer, and comprises, preferably consists of, the non cross-linked polymer composition comprising

(a) a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers, and
(b) an ion exchanger additive; as defined in any of the preceding claims 8-12;

- a process for producing (ii) a communication cable comprising a communication conductor which is surrounded by at least one layer, wherein the process comprises the steps of
- applying on a communication conductor, preferably by (co)extrusion, at least one layer which is preferably an insulation layer or a combined insulation/jacketing layer, more preferably a combined insulation/jacketing layer, and comprises, preferably consists of, the non cross-linked polymer composition comprising

(a) a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers, and
(b) an ion exchanger additive; as defined in any of the preceding claims 8-12; or, and preferably,

- a process for producing (iii) a direct current (DC) LV power cable comprising an electrical conductor and further comprising a communication conductor, wherein the conductor system of communication conductor and electrical conductor are surrounded by at least one layer, wherein the process comprises the steps of
- applying on said conductor system, preferably by (co)extrusion, at least one layer which is an insulation layer, jacketing layer or a combined insulation/jacketing layer, more preferably a combined insulation/jacketing layer, and comprises, preferably consists of, the non cross-linked polymer composition comprising

(a) a polyolefin which is a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers, and
(b) an ion exchanger additive; as defined in any of the preceding claims 8-12.

**15.** The process of claim 14 for producing a direct current (DC) LV power cable (iii) for submarine repeater applications, comprising a conductor system, which comprises a tubular electrical conductor surrounding a communication conductor which preferably comprises one or more optical fibres, and which conductor system is surrounded by at least one layer, wherein the process comprises the steps of

- applying on said conductor system, preferably by (co)extrusion, at least one layer which is an insulation layer or a combined insulation/jacketing layer, more preferably a combined insulation/jacketing layer, and comprises, preferably consists of, the non cross-linked polymer composition comprising

(a) a polyolefin which is a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers, and
(b) an ion exchanger additive; as defined in any of the preceding claims 8-12.

16. A use of a non cross-linked polymer composition comprising

(a) a polyolefin which is a polyethylene produced in the presence of an olefin polymerisation catalyst and selected from very low density polyethylene (VLDPE) copolymers, linear low density polyethylene (LLDPE) copolymers, medium density polyethylene (MDPE) copolymers or high density polyethylene (HDPE) homopolymers or copolymers, and
(b) an ion exchanger additive; as defined in any of the preceding claims 8-12, for producing an electrical or communication device comprising said polymer composition, for producing an insulation layer of an electrical or communication device.

**Patentansprüche**

1. Kabel ausgewählt aus:

(i) einem Niederspannungsd-(LV)-stromkabel, welches bei Spannungsniveaus von weniger als 10 kV arbeitet und welches einen elektrischen Leiter umfasst, welcher von mindestens einer Schicht ausgewählt aus einer Isolationsschicht, einer Ummantelungsschicht oder einer kombinierten Isolations- und Ummantelungsschicht umgeben ist, umfassend eine nicht quer-vernetzte Polymerzusammensetzung, welche

(a) ein Polymer und
(b) ein Ionenaustauscheradditiv umfasst; oder

(ii) ein Kommunikationskabel, welches einen Kommunikationsleiter umfasst, welcher von mindestens einer Schicht, welche eine nicht quer-vernetzte Polymerzusammensetzung umfasst, umgeben ist, welche

(a) ein Polymer und
(b) ein Ionenaustauscheradditiv umfasst;
wobei der Anteil (level) des Ionenaustauscheradditivs weniger als 0,8 Gew.% bezogen auf das gesamte Gewicht der nicht quer-vernetzten Polymerzusammensetzung ist;
wobei das Polymer (a) ein Polyolefin ist, welches ein Polyethylen ist, hergestellt in der Anwesenheit eines Olefinpolymerisationskatalysators und ausgewählt aus Polyethylen mit sehr niedriger Dichte (VLDPE) Kopolymeren, linearen Polyethylen mit niedriger Dichte (LLDPE) Kopolymeren, Polyethylen mit mittlerer Dichte (MDPE) Kopolymeren oder Polyethylen mit hoher Dichte (HDPE) Homopolymeren oder Kopolymeren;
und wobei die nicht quer-vernetzte Polymerzusammensetzung das Polymer (a) in einer Menge von mindestens 50 Gew.% umfasst.

2. Kabel nach Anspruch 1, wobei das LV-Stromkabel (i) ein Gleichstrom (DC) LV-Stromkabel ist, welches einen elektrischen Leiter umfasst, der von mindestens einer Schicht, welche ausgewählt ist aus einer Isolationsschicht, einer Ummantelungsschicht oder einer kombinierten Isolations- / Ummantelungsschicht, umgeben ist, und welche eine nicht quer-vernetzte Polymerzusammensetzung umfasst, umfassend

(a) ein Polyolefin, welches ein Polyethylen ist, hergestellt in der Anwesenheit eines Olefinpolymerisationskatalysators und ausgewählt aus Polyethylen mit sehr niedriger Dichte (VLDPE) Kopolymeren, linearen Polyethylen mit niedriger Dichte (LLDPE) Kopolymeren, Polyethylen mit mittlerer Dichte (MDPE) Kopolymeren oder Polyethylen mit hoher Dichte (HDPE) Homopolymeren oder Kopolymeren; und

(b) ein Ionenaustauscheradditiv.

3. Kabel gemäß Anspruch 1 oder 2, wobei das LV-Stromkabel (i) (iii) ein Gleichstrom (DC) LV-Stromkabel ist, welches einen elektrischen Leiter umfasst und zusätzlich einen Kommunikationsleiter umfasst, wobei der Kommunikationsleiter und elektrische Leiter von mindestens einer Schicht, welche ausgewählt ist aus einer Isolationsschicht, einer Ummantelungsschicht oder einer kombinierten Isolations- / Ummantelungsschicht, umgeben sind, und welche eine nicht quer-vernetzte Polymerzusammensetzung umfasst, umfassend

(a) ein Polyolefin, welches ein Polyethylen ist, hergestellt in der Anwesenheit eines Olefinpolymerisationskatalysators und ausgewählt aus Polyethylen mit sehr niedriger Dichte (VLDPE) Kopolymeren, linearen Polyethylen mit niedriger Dichte (LLDPE) Kopolymeren, Polyethylen mit mittlerer Dichte (MDPE) Kopolymeren oder Polyethylen mit hoher Dichte (HDPE) Homopolymeren oder Kopolymeren; und

(b) ein Ionenaustauscheradditiv.

4. Kabel gemäß einem der vorhergehenden Ansprüche, wobei die mindestens eine Schicht eine kombinierte Isolations- / Ummantelungsschicht ist, welche umfasst, vorzugsweise besteht aus, einer nicht quer-vernetzten Polymerzusammensetzung, umfassend

(a) ein Polyolefin, welches ein Polyethylen ist, hergestellt in der Anwesenheit eines Olefinpolymerisationskatalysators und ausgewählt aus Polyethylen mit sehr niedriger Dichte (VLDPE) Kopolymeren, linearen Polyethylen mit niedriger Dichte (LLDPE) Kopolymeren, Polyethylen mit mittlerer Dichte (MDPE) Kopolymeren oder Polyethylen mit hoher Dichte (HDPE) Homopolymeren oder Kopolymeren; und

(b) ein Ionenaustauscheradditiv.

5. Kabel gemäß einem der vorhergehenden Ansprüche 1, 3 oder 4, wobei der Kommunikationsleiter einen oder mehrere Kommunikationsdrähte umfasst, welche ein oder mehrere optische Fasern sind.

6. Kabel gemäß einem der vorhergehenden Ansprüche, wobei das Kabel ein Gleichstrom (DC) LV-Stromkabel (iii) für Anwendungen verstärkter Unterwasserkabel (repeatered submarine cable applications) ist.

7. Kabel gemäß einem der vorhergehenden Ansprüche, welches ein Gleichstrom (DC) LV-Stromkabel (iii) ist, umfassend ein Leitersystem, welches einen röhrenförmigen elektrischen Leiter umfasst, der einen Kommunikationsleiter umgibt, der vorzugsweise ein oder mehrere optische Fasern umfasst, und wobei das Leitersystem von mindestens einer Schicht, welche ausgewählt ist aus einer Isolationsschicht oder einer kombinierten Isolations- / Ummante-lungsschicht, bevorzugter, welche eine kombinierte Isolations- / Ummantelungsschicht ist, umgeben ist, umfassend, vorzugsweise bestehend aus, einer nicht quer-vernetzten Polymerzusammensetzung, welche umfasst

(a) ein Polyolefin, welches ein Polyethylen ist, hergestellt in der Anwesenheit eines Olefinpolymerisationskatalysators und ausgewählt aus Polyethylen mit sehr niedriger Dichte (VLDPE) Kopolymeren, linearen Polyethylen mit niedriger Dichte (LLDPE) Kopolymeren, Polyethylen mit mittlerer Dichte (MDPE) Kopolymeren oder Polyethylen mit hoher Dichte (HDPE) Homopolymeren oder Kopolymeren, und

(b) ein Ionenaustauscheradditiv; und

das Kabel (iii) für Anwendungen verstärkter Unterwasserkabel (repeatered submarine cable applications) ist.

8. Kabel gemäß einem der vorhergehenden Ansprüche, wobei das Ionenaustauscheradditiv (b) ein anorganisches Ionenaustauscheradditiv ist; bevorzugter ein anorganisches Anionenaustauscheradditiv; bevorzugter kann das Anionenaustauscheradditiv (b) Anionen durch Halogene (d.h. Fanghalogene) austauschen, vorzugsweise mindestens chlorhaltige Spezies; ferner vorzugsweise weist das Ionenaustauscheradditiv (b) eine lamellare Struktur auf; und ferner vorzugsweise ist es ein lamellares Anionenaustauscheradditiv, vorzugsweise ein lamellares Anionenaustauscheradditiv, welches anionische Zwischenschichten umfasst; noch bevorzugter umfassen die Zwischenschichten des lamellaren Anionenaustauschers (c) $CO_3{}^{2-}$-Anionen, die austauschbar mit den anionischen Spezies, die in der Polymerzusammensetzung anwesend sind, sind.

9. Kabel gemäß einem der vorhergehenden Ansprüche, wobei das Ionenaustauscheradditiv (b) ein Anionenaustau-scheradditiv vom Hydrotalcit-Typ ist, vorzugsweise von einem synthetischen Hydrotalcit-Typ, umfassend anionische Zwischenschichten, welche austauschbare $CO_3{}^{2-}$ Anionen umfassen.

**10.** Kabel gemäß einem der vorhergehenden Ansprüche, wobei die nicht quer-vernetzte Polymerzusammensetzung das lonenaustauscheradditiv (a) als solches, d.h. unverdünnt, in einer Menge von 0,000001 bis 0,7 Gew.% umfasst, bezogen auf das gesamte Gewicht der Polymerzusammensetzung.

**11.** Kabel gemäß einem der vorhergehenden Ansprüche, wobei das Polymer (a) ausgewählt ist aus einem unimodalen oder multimodalen LLDPE Kopolymer, einem unimodalen oder multimodalen MDPE Kopolymer oder einem unimodalen oder multimodalen HDPE Polymer, noch bevorzugter ist das Polyolefin (a) ein Polyethylen, hergestellt in der Anwesenheit eines Olefinpolymerisationskatalysator, welches eine Dichte von 920 bis 960 kg/m$^3$ hat, bevorzugter 930 bis 955 kg/m$^3$, und unimodal oder multimodal im Bezug auf die Molekulargewichtsverteilung ist.

**12.** Kabel gemäß einem der vorhergehenden Ansprüche, wobei die nicht quer-vernetzte Polymerzusammensetzung das Polymer (a) in einer Menge von mindestens 60 Gew.%, bevorzugter mindestens 70 Gew.%, bevorzugter mindestens 75 Gew.%, des gesamten Gewichts der Polymerkomponente(n), die in der Polymerzusammensetzung anwesend sind, umfasst.

**13.** Kabel gemäß einem der vorhergehenden Ansprüche, wobei die mindestens eine Schicht eine Isolationsschicht oder eine kombinierte Isolations- / Ummantelungsschicht, bevorzugter eine kombinierte Isolations- / Ummantelungsschicht ist.

**14.** Verfahren zum Herstellen eines Kabel ausgewählt aus

- einem Verfahren zum Herstellen (i) eines Niederspannungs-(LV)-stromkabels, welches bei Spannungsniveaus von weniger als 10 kV arbeitet und, welches einen elektrischen Leiter umfasst, welcher von mindestens einer Schicht umgeben ist, wobei das Verfahren die Schritte umfasst von
- Aufbringen auf einen elektrischen Leiter, vorzugsweise durch (Ko-) Extrusion, mindestens einer Schicht, welche eine Isolationsschicht, eine Ummantelungsschicht oder eine kombinierte Isolations- / Ummantelungsschicht, bevorzugter eine kombinierte Isolations- / Ummantelungsschicht ist, und umfasst, vorzugsweise besteht aus, der nicht quer-vernetzten Polymerzusammensetzung, umfassend

(a) ein Polyethylen, hergestellt in der Anwesenheit eines Olefinpolymerisationskatalysators und ausgewählt aus Polyethylen mit sehr niedriger Dichte (VLDPE) Kopolymeren, linearen Polyethylen mit niedriger Dichte (LLDPE) Kopolymeren, Polyethylen mit mittlerer Dichte (MDPE) Kopolymeren oder Polyethylen mit hoher Dichte (HDPE) Homopolymeren oder Kopolymeren, und
(b) ein lonenaustauscheradditiv; wie in einem der vorhergehenden Ansprüche 8 - 12 definiert;

- einem Verfahren zum Herstellen (ii) eines Kommunikationskabels, welches einen Kommunikationsleiter umfasst, welcher von mindestens einer Schicht umgeben ist, wobei das Verfahren die Schritte umfasst von
- Aufbringen auf einen Kommunikationsleiter, vorzugsweise durch (Ko-) Extrusion, mindestens einer Schicht, welche vorzugsweise eine Isolationsschicht oder eine kombinierte Isolations- / Ummantelungsschicht, bevorzugter eine kombinierte Isolations- / Ummantelungsschicht ist, und umfasst, vorzugsweise besteht aus, die nicht quer-vernetzte Polymerzusammensetzung, umfassend

(a) ein Polyethylen, hergestellt in der Anwesenheit eines Olefinpolymerisationskatalysators und ausgewählt aus Polyethylen mit sehr niedriger Dichte (VLDPE) Kopolymeren, linearen Polyethylen mit niedriger Dichte (LLDPE) Kopolymeren, Polyethylen mit mittlerer Dichte (MDPE) Kopolymeren oder Polyethylen mit hoher Dichte (HDPE) Homopolymeren oder Kopolymeren und
(b) ein lonenaustauscheradditiv; wie in einem der vorhergehenden Ansprüche 8 - 12 definiert; oder, und vorzugsweise,
einem Verfahren zum Herstellen (iii) eines Gleichstrom (DC) LV-Stromkabels, welches einen elektrischen Leiter umfasst und weiterhin einen Kommunikationsleiter umfasst, wobei das Leitersystem aus Kommunikationsleiter und elektrischem Leiter von mindestens einer Schicht umgeben sind, wobei das Verfahren die Schritte umfasst von

- Aufbringen auf das Leitersystem, vorzugsweise durch (Ko-) Extrusion, mindestens einer Schicht, welche eine Isolationsschicht, Ummantelungsschicht oder eine kombinierte Isolations- / Ummantelungsschicht, bevorzugter eine kombinierte Isolations- / Ummantelungsschicht ist, und umfasst, vorzugsweise besteht aus, der nicht quer-vernetzte Polymerzusammensetzung, umfassend

(a) ein Polyolefin, welches ein Polyethylen ist, hergestellt in der Anwesenheit eines Olefinpolymerisationskatalysators und ausgewählt aus Polyethylen mit sehr niedriger Dichte (VLDPE) Kopolymeren, linearen Polyethylen mit niedriger Dichte (LLDPE) Kopolymeren, Polyethylen mit mittlerer Dichte (MDPE) Kopolymeren oder Polyethylen mit hoher Dichte (HDPE) Homopolymeren oder Kopolymeren, und
(b) ein Ionenaustauscheradditiv; wie in einem der vorhergehenden Ansprüche 8 - 12 definiert.

15. Verfahren von Anspruch 14 zum Herstellen eines Gleichstrom (DC) LV-Stromkabels (iii) für Unterwasser-Verstärker Anwendungen (submarine repeater applications), umfassend ein Leitersystem, welches einen röhrenförmigen elektrischen Leiter umfasst, der einen Kommunikationsleiter umgibt, welcher vorzugsweise ein oder mehrere optische Fasern umfasst, und das Leitersystem von mindestens einer Schicht umgeben ist, wobei das Verfahren die Schritte umfasst von

- Aufbringen auf das Leitersystem, vorzugsweise durch (Ko-) Extrusion, mindestens einer Schicht, welche eine Isolationsschicht oder eine kombinierte Isolations- / Ummantelungsschicht, bevorzugter eine kombinierte Isolations- / Ummantelungsschicht ist, und umfasst, vorzugsweise besteht aus, der nicht quer-vernetzten Polymerzusammensetzung, umfassend

(a) ein Polyolefin, welches ein Polyethylen ist, hergestellt in der Anwesenheit eines Olefinpolymerisationskatalysators und ausgewählt aus Polyethylen mit sehr niedriger Dichte (VLDPE) Kopolymeren, linearen Polyethylen mit niedriger Dichte (LLDPE) Kopolymeren, Polyethylen mit mittlerer Dichte (MDPE) Kopolymeren oder Polyethylen mit hoher Dichte (HDPE) Homopolymeren oder Kopolymeren, und
(b) ein Ionenaustauscheradditiv; wie in den vorhergehenden Ansprüchen 8 - 12 definiert.

16. Verwendung einer nicht quer-vernetzten Polymerzusammensetzung, umfassend

(a) ein Polyolefin, welches ein Polyethylen ist, hergestellt in der Anwesenheit eines Olefinpolymerisationskatalysators und ausgewählt aus Polyethylen mit sehr niedriger Dichte (VLDPE) Kopolymeren, linearen Polyethylen mit niedriger Dichte (LLDPE) Kopolymeren, Polyethylen mit mittlerer Dichte (MDPE) Kopolymeren oder Polyethylen mit hoher Dichte (HDPE) Homopolymeren oder Kopolymeren, und
(b) ein Ionenaustauscheradditiv; wie in einem der vorhergehenden Ansprüche 8 - 12 definiert, zum Herstellen einer elektrischen oder Kommunikations- Vorrichtung, welche die Polymerzusammensetzung umfasst, zum Herstellen einer Isolationsschicht einer elektrischen oder Kommunikations-Vorrichtung.

## Revendications

1. Câble choisi parmi :

(i) un câble électrique basse tension (BT) fonctionnant à des niveaux de tension inférieurs à 10 kV et comprenant un conducteur électrique qui est entouré d'au moins une couche choisie parmi une couche d'isolation, une couche de gainage ou une couche d'isolation et de gainage combinée comprenant une composition de polymère non réticulé qui comprend

(a) un polymère, et
(b) un additif échangeur d'ions ; ou

(ii) un câble de communication comprenant un conducteur de communication qui est entouré d'au moins une couche comprenant une composition de polymère non réticulé qui comprend

(a) un polymère, et
(b) un additif échangeur d'ions ;
dans lequel le taux d'additif d'échange d'ions est inférieur à 0,8 % en poids rapporté au poids total de la composition de polymère non réticulé ;
dans lequel le polymère (a) est une poly(oléfine) qui est un poly(éthylène) produit en présence d'un catalyseur de polymérisation d'oléfine et choisi parmi des copolymères de poly(éthylène) très basse densité (VLDPE), des copolymères de poly(éthylène) basse densité linéaire (LLDPE), des copolymères de poly(éthylène) densité moyenne (MDPE) ou des homopolymères ou copolymères de poly(éthylène) haute densité (HDPE) ;

et dans lequel la composition de polymère non réticulé comprend le polymère (a) dans une quantité d'au moins 50 % en poids.

2. Câble selon la revendication 1, dans lequel le câble électrique BT (i) est un câble électrique BT à courant continu (CC) comprenant un conducteur électrique entouré d'au moins une couche qui est choisie parmi une couche d'isolation, une couche de gainage ou une couche d'isolation/de gainage combinée et qui comprend une composition de polymère non réticulé comprenant

   (a) une poly(oléfine) qui est un poly(éthylène) produit en présence d'un catalyseur de polymérisation d'oléfine et choisi parmi des copolymères de poly(éthylène) très basse densité (VLDPE), des copolymères de poly(éthylène) basse densité linéaire (LLDPE), des copolymères de poly(éthylène) densité moyenne (MDPE) ou des homopolymères ou copolymères de poly(éthylène) haute densité (HDPE), et
   (b) un additif échangeur d'ions.

3. Câble selon la revendication 1 ou 2, dans lequel le câble électrique BT (i) est (iii) un câble électrique BT à courant continu (CC) comprenant un conducteur électrique et comprenant en outre un conducteur de communication, dans lequel le conducteur de communication et le conducteur électrique sont entourés d'au moins une couche qui est choisie parmi une couche d'isolation, une couche de gainage ou une couche d'isolation/de gainage combinée et qui comprend une composition de polymère non réticulé comprenant

   (a) une poly(oléfine) qui est un poly(éthylène) produit en présence d'un catalyseur de polymérisation d'oléfine et choisi parmi des copolymères de poly(éthylène) très basse densité (VLDPE), des copolymères de poly(éthylène) basse densité linéaire (LLDPE), des copolymères de poly(éthylène) densité moyenne (MDPE) ou des homopolymères ou copolymères de poly(éthylène) haute densité (HDPE), et
   (b) un additif échangeur d'ions.

4. Câble selon l'une quelconque des revendications précédentes, dans lequel l'au moins une couche est une couche d'isolation/de gainage combinée qui comprend, de préférence est constituée d'une composition de polymère non réticulé comprenant

   (a) une poly(oléfine) qui est un poly(éthylène) produit en présence d'un catalyseur de polymérisation d'oléfine et choisi parmi des copolymères de poly(éthylène) très basse densité (VLDPE), des copolymères de poly(éthylène) basse densité linéaire (LLDPE), des copolymères de poly(éthylène) densité moyenne (MDPE) ou des homopolymères ou copolymères de poly(éthylène) haute densité (HDPE), et
   (b) un additif échangeur d'ions.

5. Câble selon l'une quelconque des revendications 1, 3 ou 4 précédentes, dans lequel le conducteur de communication comprend un ou plusieurs fils de communication qui sont une ou plusieurs fibres optiques.

6. Câble selon l'une quelconque des revendications précédentes, dans lequel le câble est un câble électrique BT à courant continu (CC) (iii) pour des applications de câble sous-marin à répéteur.

7. Câble selon l'une quelconque des revendications précédentes, qui est un câble électrique BT à courant continu (CC) (iii) comprenant un système de conducteur, qui comprend un conducteur électrique tubulaire entourant un conducteur de communication qui comprend de préférence une ou plusieurs fibres optiques, et lequel système de conducteur est entouré d'au moins une couche qui est choisie parmi une couche d'isolation ou une couche d'isolation/de gainage combinée, de manière davantage préférée, qui est une couche d'isolation/de gainage combinée, comprenant, de préférence constituée d'une composition de polymère non réticulé qui comprend

   (a) une poly(oléfine) qui est une poly(éthylène) produit en présence d'un catalyseur de polymérisation d'oléfine et choisi parmi des copolymères de poly(éthylène) très basse densité (LDPE), des copolymères de poly(éthylène) basse densité linéaire (LLDPE), des copolymères de poly(éthylène) densité moyenne (MDPE) ou des homopolymères ou copolymères de poly(éthylène) haute densité (HDPE), et
   (b) un additif échangeur d'ions ; et
   ledit câble (iii) est destiné à des applications de câble sous-marin à répéteur.

8. Câble selon l'une quelconque des revendications précédentes, dans lequel l'additif échangeur d'ions (b) est un additif échangeur d'ions inorganique ; de manière davantage préférée un additif échangeur d'anions inorganique ;

de manière davantage préférée l'additif échangeur d'anions (b) peut échanger des anions par des halogènes (c'est-à-dire capturer des halogènes), de préférence au moins des espèces à base de chlore ; de manière encore davantage préférée l'additif échangeur d'ions (b) a une structure lamellaire ; et de manière encore davantage préférée est un additif échangeur d'anions lamellaire, de préférence un additif échangeur d'anions lamellaire qui comprend des intercouches anioniques ; de manière encore davantage préférée lesdites intercouches de l'échangeur d'anions lamellaires (c) comprennent des anions $CO_3^{2-}$ qui sont échangeables avec les espèces anioniques présentes dans la composition de polymère.

9. Câble selon l'une quelconque des revendications précédentes, dans lequel l'additif échangeur d'ions (b) est un additif échangeur d'anions de type hydrotalcite, de préférence d'un type hydrotalcite synthétique, comprenant des intercouches anioniques qui comprennent des anions $CO_3^{2-}$ échangeables.

10. Câble selon l'une quelconque des revendications précédentes, dans lequel la composition de polymère non réticulé comprend l'additif échangeur d'ions (b) en tant que tel, c'est-à-dire pur, dans une quantité de 0,000001 à 0,7 % en poids, rapporté au poids total de la composition de polymère.

11. Câble selon l'une quelconque des revendications précédentes, dans lequel le polymère (a) est choisi parmi un copolymère LLDPE unimodal ou multimodal, un copolymère MDPE unimodal ou multimodal ou un polymère HDPE unimodal ou multimodal, de manière encore davantage préférée la poly(oléfine) (a) est un poly(éthylène) produit en présence d'un catalyseur de polymérisation d'oléfine qui a une masse volumique de 920 à 960 kg/m$^3$, de manière davantage préférée 930 à 955 kg/m$^3$, et est unimodal ou multimodal en termes de distribution du poids moléculaire.

12. Câble selon l'une quelconque des revendications précédentes, dans lequel la composition de polymère non réticulé comprend le polymère (a) dans une quantité d'au moins 60 % en poids, de manière davantage préférée au moins 70 % en poids, de manière davantage préférée au moins 75 % en poids, du poids total du ou des composants de polymère présents dans la composition de polymère.

13. Câble selon l'une quelconque des revendications précédentes, dans lequel l'au moins une couche est une couche d'isolation ou une couche d'isolation/de gainage combinée, de manière davantage préférée une couche d'isolation/de gainage combinée.

14. Procédé de production d'un câble choisi parmi

- un procédé de production (i) d'un câble électrique basse tension (BT) fonctionnant à des niveaux de tension inférieurs à 10 kV et comprenant un conducteur électrique qui est entouré d'au moins une couche, dans lequel le procédé comprend l'étape
- d'application sur un conducteur électrique, de préférence par (co)extrusion, d'au moins une couche qui est une couche d'isolation, une couche de gainage ou une couche d'isolation/de gainage combinée, de manière davantage préférée une couche d'isolation/de gainage combinée, et comprend, de préférence est constituée de la composition de polymère non réticulé comprenant

(a) un poly(éthylène) produit en présence d'un catalyseur de polymérisation d'oléfine et choisi parmi des copolymères de poly(éthylène) très basse densité (VLDPE), des copolymères de poly(éthylène) basse densité linéaire (LLDPE), des copolymères de poly(éthylène) densité moyenne (MDPE) ou des homopolymères ou copolymères de poly(éthylène) haute densité (HDPE), et
(b) un additif échangeur d'ions ; tels que définis dans l'une quelconque des revendications 8 à 12 précédentes ;

- un procédé de production (ii) d'un câble de communication comprenant un conducteur de communication qui est entouré d'au moins une couche, dans lequel le procédé comprend l'étape
- d'application sur un conducteur de communication, de préférence par (co)extrusion, d'au moins une couche qui est de préférence une couche d'isolation ou une couche d'isolation/de gainage combinée, de manière davantage préférée une couche d'isolation/de gainage combinée, et comprend, de préférence est constituée de la composition de polymère non réticulé comprenant

(a) un poly(éthylène) produit en présence d'un catalyseur de polymérisation d'oléfine et choisi parmi des copolymères de poly(éthylène) très basse densité (VLDPE), des copolymères de poly(éthylène) basse densité linéaire (LLDPE), des copolymères de poly(éthylène) densité moyenne (MDPE) ou des homopolymères ou copolymères de poly(éthylène) haute densité (HDPE), et

(b) un additif échangeur d'ions ; tels que définis dans l'une quelconque des revendications 8 à 12 précédentes ; ou, et de préférence,

- un procédé de production (iii) d'un câble électrique (BT) à courant continu (CC) comprenant un conducteur électrique et comprenant en outre un conducteur de communication, dans lequel le système de conducteur du conducteur de communication et du conducteur électrique sont entourés d'au moins une couche, dans lequel le procédé comprend l'étape

- d'application sur ledit système de conducteur, de préférence par (co)extrusion, d'au moins une couche qui est une couche d'isolation, une couche de gainage ou une couche d'isolation/de gainage combinée, de manière davantage préférée une couche d'isolation/de gainage combinée, et comprend, et de préférence est constituée de la composition de polymère non réticulé comprenant

(a) une poly(oléfine) qui est un poly(éthylène) produit en présence d'un catalyseur de polymérisation d'oléfine et choisi parmi des copolymères de poly(éthylène) très basse densité (VLDPE), des copolymères de poly(éthylène) basse densité linéaire (LLDPE), des copolymères de poly(éthylène) densité moyenne (MDPE) ou des homopolymères ou copolymères de poly(éthylène) haute densité (HDPE), et

(b) un additif échangeur d'ions ; tels que définis dans l'une quelconque des revendications 8 à 12 précédentes.

15. Procédé selon la revendication 14 de production d'un câble électrique BT à courant continu (CC) (iii) pour des applications de répéteur sous-marin, comprenant un système de conducteur, qui comprend un conducteur électrique tubulaire entourant un conducteur de communication qui comprend de préférence une ou plusieurs fibres optiques, et lequel système de conducteur est entouré d'au moins une couche, dans lequel le procédé comprend l'étape

- d'application sur ledit système de conducteur, de préférence par (co)extrusion, d'au moins une couche qui est une couche d'isolation ou une couche d'isolation/de gainage combinée, de manière davantage préférée une couche d'isolation/de gainage combinée, et comprend, et de préférence est constituée de la composition de polymère non réticulé comprenant

(a) une poly(oléfine) qui est un poly(éthylène) produit en présence d'un catalyseur de polymérisation d'oléfine et choisi parmi des copolymères de poly(éthylène) très basse densité (VLDPE), des copolymères de poly(éthylène) basse densité linéaire (LLDPE), des copolymères de poly(éthylène) densité moyenne (MDPE) ou des homopolymères ou copolymères de poly(éthylène) haute densité (HDPE), et

(b) un additif échangeur d'ions ; tels que définis dans l'une quelconque des revendications 8 à 12 précédentes.

16. Utilisation d'une composition de polymère non réticulé comprenant

(a) une poly(oléfine) qui est un poly(éthylène) produit en présence d'un catalyseur de polymérisation d'oléfine et choisi parmi des copolymères de poly(éthylène) très basse densité (VLDPE), des copolymères de poly(éthylène) basse densité linéaire (LLDPE), des copolymères de poly(éthylène) densité moyenne (MDPE) ou des homopolymères ou copolymères de poly(éthylène) haute densité (HDPE), et

(b) un additif échangeur d'ions ; tels que définis dans l'une quelconque des revendications 8 à 12 précédentes, pour produire un dispositif électrique ou de communication comprenant ladite composition de polymère, pour produire une couche d'isolation d'un dispositif électrique ou de communication.

**Fig 1**

**Fig 2**

**Fig 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5889117 A
- EP 0810235 A
- EP 0688794 A
- WO 03000754 A
- EP 1484345 A
- EP 517868 A

### Non-patent literature cited in the description

- **J. RANDALL.** *JMS - Rev. Macromol. Chem. Phys.,* 1989, vol. C29 (2,3), 201-317